# EUROPEAN PATENT SPECIFICATION

(11) **EP 3 637 240 B1**
(45) Date of publication and mention of the grant of the patent: **07.06.2023**
(21) Application number: 18199630.7
(22) Date of filing: 10.10.2018
(51) Int. Cl.: G06F 3/0488, G06F 3/041, G06F 3/0482, D06F 33/32

(54) **SCANNING DEVICE WITH IMPROVED EFFICIENCY AND HOUSEHOLD APPLIANCE COMPRISING SAID SCANNING DEVICE**
ABTASTVORRICHTUNG MIT VERBESSERTER EFFIZIENZ UND HAUSHALTSGERÄT DASS DIE ABTASTVORRICHUNG BEINHALTET
DISPOSITIF DE BALAYAGE À EFFICACITÉ AMÉLIORÉE ET APPAREIL ELECTROMÉNAGER COMPRENANT LE DISPOSITIF DE BALAYAGE

(43) Date of publication of application: 15.04.2020
(73) Proprietor: Robert Bosch GmbH, 70442 Stuttgart (DE)
(72) Inventor: Sagoo, Kiran Pal, 82256 Fürstenfeldbruck (DE); Tauber, Matthias, 73105 Duernau (DE)

(56) References cited:
- EP-A1- 3 159 448
- US-A1- 2001 042 391
- US-A1- 2015 084 874
- US-A1- 2015 169 194
- "COLD AS ICE INTELLIGENT REFRIGERATOR, USER'S MANUAL", INTERNET CITATION, 1 September 2004 (2004-09-01), page 9pp, XP007900094, Retrieved from the Internet: URL:www.shay.ecn.purdie.edu/~dsml/ece477/W ebs/F04-Grp11/index_files/Documents/UM.pdf [retrieved on 2006-03-03]

## Description

Scanning device with improved efficiency and household appliance The present document relates to a scanning device, which is configured to determine spectral data regarding a scanning item, such as a clothing item or a food item. In particular, the present document relates to improving the efficiency and comfort of use of such a scanning device when handling a plurality of different items.

Housing appliances, such as a washing machine, a dishwasher or a refrigerator, may be operated in different operation modes or may comprise different compartments for storing different types of items that may be placed within the housing appliance. By way of example, the washing program which is used by a washing machine to obtain optimal washing results is typically dependent on the type of clothing items that are placed within the washing machine. In a similar manner, a refrigerator may comprise different compartments for storing food items, wherein the climatic conditions, notably the temperature, of the different compartments may be optimal for different types of food items.

EP 3 159 448 A1 describes a system for treating textile articles. In particular, EP 3 159 448 A1 discloses a household appliance configured to store and/or to process items, wherein the household appliance comprises a scanning device, and wherein the scanning device comprises a spectral sensor configured to determine spectral data regarding an item, a touch sensitive display and a control unit,

US 2015/084874 A1 describes a method for click detection of a force pad. US 2001/042391 A1 describes a laundry treatment machine. "COLD AS ICE INTELLIGENT REFRIGERATOR, USER'S MANUAL", 1 September 2004 (2004-09-01), page 9pp, URL:www.shay.eon.purdie.edu/~dsml/ece477/Webs/F04-Grp11/index_files/Documents/UM.pdf is a user manual for a laundry appliance. US 2015/169194 A1 describes a graphical user interface for a washing machine. Information regarding items which are to be placed within and/or processed by a household appliance may be determined using a scanning device. The use of a scanning device for a relatively high number of different items may be cumbersome. The present document addresses the technical problem of increasing the efficiency and the comfort of use of a scanning device, notably when handling a plurality of different items.

The technical problem is solved by each of the independent claims. Preferred embodiments are defined by the dependent claims.

According to an aspect, a scanning device for determining spectral data regarding a plurality of items, notably clothing or textile items and/or food items, is described. The scanning device may be configured to be held in the hand of a user, i.e. the scanning device may be a handheld and/or mobile scanning device. In particular, the scanning device may be designed such that a user may bring the scanning device into proximity of an item (and/or vice versa) to perform a scanning process for determining spectral data regarding the item. The spectral data may then be used to determine property information regarding the item, such as information regarding the physical composition of the item. The scanning device comprises a spectral sensor which is configured to determine spectral data regarding an item which is placed in front of the spectral sensor. The spectral data may comprise and/or may depend on a reflection and/or an absorption spectrum of the item. In particular, the spectral data may be indicative of the energy of absorbed and/or reflected electromagnetic radiation as a function of wavelength. The spectral sensor may be or may comprise a near infrared sensor.

Furthermore, the scanning device comprises a proximity and/or distance sensor which is configured to determine distance information regarding the distance of an item to the spectral sensor. The proximity and/or distance sensor may e.g. comprise an ultrasonic, optical, capacitive and/or inductive proximity and/or distance sensor. The proximity and/or distance sensor may be positioned directly adjacent to the spectral sensor (e.g. on a frontside of the scanning device). On the other hand, the proximity and/or distance sensor and the spectral sensor may be separate and/or different from one another.

The scanning device may comprise a housing, wherein the housing forms a handle and a measuring head. The spectral sensor and the proximity and/or distance sensor may be positioned in or at the measuring head (on the frontside of the scanning device). The housing may have a form similar to a pistol or a handheld barcode scanner.

Furthermore, the scanning device comprises a touch and pressure sensitive display. The display may be positioned at a backside of the scanning device (e.g. on the handle of the scanning device). The display may is configured to provide a virtual button. The virtual button may be displayed (e.g. as an icon) on the display. A user may be enabled to press on the display (notably on the displayed icon on the display). The function of the scanning device, which is caused by actuating the virtual button may be dependent on the force which is applied to the display, when pressing the virtual button.

In addition, the scanning device comprises a control unit (e.g. a microprocessor).

The control unit is configured to determine whether the virtual button has been actuated to enable a repeated scanning process. In particular, the control unit may be configured to determine force information regarding a force which is applied to the virtual button, and it may be determined based on the force information, whether the virtual button has been actuated to enable a repeated scanning process. In a preferred example, it is determined, based on the force information, if the applied force is at or above a force threshold. It may then be determined that the virtual button has been actuated to enable a repeated scanning process, if it is determined that the applied force is at or above the force threshold. On the other hand, it may be determined that the virtual button has been actuated to enable a single scanning process, if it is determined that the applied force is below the force threshold. Hence, multiple functions of the scanning device may be initiated using a single virtual button.

In addition, the control unit is configured to automatically initiate a sequence of scanning processes for determining spectral data for the plurality of items, if it is determined that the virtual button has been actuated to enable a repeated scanning process. In particular, the sequence of scanning processes may be initiated without the need for any further input by the user for sequentially scanning the plurality of different items (e.g. 5, 10, 20 or more items).

Hence, a scanning device is provided which comprises a virtual button that is used to set the scanning device to a mode which allows for sequential scanning of different items. As a result of this, the comfort and the efficiency of using a scanning device is increased.

The control unit is be configured to determine, based on the distance information provided by the proximity and/or distance sensor, that the distance of a first item from the plurality of different items is at or below a pre-determined distance threshold. In reaction to this, a scanning process of the spectral sensor for determining spectral data regarding the first item is initiated in an automatic manner (without the need for any further input by the user). In particular, the control unit may be configured to automatically initiate the scanning processes for the plurality of different items in dependence of the respective distance information for each of the plurality of different items, if it is determined that the virtual button has been actuated to enable a repeated scanning process. Hence, actuation of the virtual button enables a user to perform multiple scanning processes simply by placing the different items in front of the measuring head of the scanning device, thereby enabling a particularly efficient use of the scanning device.

The control unit may be configured to initiate a brief scanning process or a complete scanning process of an item, notably in dependence of the force information. Hence, the virtual button may also be used for initiating different types of scanning processes. A brief scanning process may be faster than a complete scanning process. On the other hand, a brief scanning process may only provide spectral data at a lower resolution than the complete scanning process. By providing different scanning modes, the comfort and efficiency of use of a scanning device may be further increased.

The scanning device may comprise a user interface (e.g. shown on the display of the scanning device) which enables a user to select an item type from a list of different items types. Example item types are one or more types of clothing items (e.g. shirts, trousers, bed sheets, jackets, etc.) and/or one or more types of food items (processed food, vegetable, etc.).

The spectral sensor may be configured to determine the spectral data in dependence of the selected item type. In particular, the spectral sensor may be configured to select a spectral range of a measurement signal for determining the spectral data based on the selected item type. The spectral sensor may be configured to emit a measurement signal. Furthermore, the spectral sensor may be configured to sense a reflected signal which is indicative of the fraction of the measurement signal that has been reflected by the item. The spectral data may then be determined based on the reflected signal (and based on the measurement signal). By adapting the measurement scheme and notably the measurement signal of the spectral sensor based on the selected item type, the relevance of the spectral data for determining a property (e.g. a composition) of an item can be improved.

The control unit may be configured to automatically reuse a selected item type for scanning the plurality of different items, if it is determined that the virtual button has been actuated. By doing this, the comfort and the efficiency of use of a scanning device may be increased further.

The control unit may be configured to determine property information regarding a property (notably a composition) of an item based on the spectral data. Alternatively or in addition, the control unit may be configured to control a household appliance (e.g. a washing machine and/or a refrigerator) for operation in conjunction with the item, based on the spectral data (and/or based on the determined property information). In particular, a washing program of a washing machine may be automatically selected based on the spectral data. In another example, an appropriate compartment of a refrigerator for storing an item may be automatically proposed to a user based on the spectral data. The property information regarding a scanned item and/or the information regarding the operation of the household appliance in conjunction with the scanned item may be output (e.g. displayed) using a user interface of the scanning device. Hence, the scanning device may be configured to improve the use of a household appliance.

The control unit may be configured to identify, based on the spectral data for the plurality of items, one or more items from the plurality of items, notably one or more items having a particular property and/or composition. Furthermore, in an example not covered by the claims, the control unit may be configured to cause highlighting means of the scanning device to highlight the one or more identified items. The highlighting means may comprise a pointing unit, notably a laser pointer, which is configured to selectively emit light (notably a laser beam) towards the one or more identified items, in order to highlight the one or more identified items relative to other items from the plurality of items. Alternatively or in addition, the highlighting means may comprise a picture of the plurality of items, which is shown on the display, wherein within the picture the one or more identified items may be pictorially highlighted relative to other items from the plurality of items (e.g. by using a different colour or one or more markings). The picture of the plurality of items may have been captured using a camera of the scanning device. By providing highlighting means, the comfort and efficiency of use of a scanning device in conjunction with a plurality of different items may be further increased.

The scanning device comprises a spectral sensor configured to determine spectral data for an item. Furthermore, in an example not covered by the claims, the scanning device comprises highlighting means which are configured to highlight one or more of the plurality of items to a user of the scanning device. In addition, the scanning device comprises a control unit which is configured to determine spectral data for each of the plurality of different items using the spectral sensor. The control unit is further configured to identify, based on the spectral data for the plurality of items, one or more items from the plurality of items, notably one or more items having a particular property. In addition, the control unit is configured to cause the highlighting means of the scanning device to highlight the one or more identified items relative to other items from the plurality of items. Hence, a scanning device is described which exhibits an increased comfort and efficiency of use when handling a plurality of different items.

According to a further aspect, a household appliance is described which is configured to store and/or to process items. The household appliance comprises the scanning device described in the present document, which is configured to determine spectral data regarding a plurality of different items, in order to support a user for storing and/or processing the plurality of different items in the household appliance.

The invention is explained below in an exemplary manner with reference to the accompanying drawings, wherein
- Figure 1: shows an example system for determining property information regarding items that are to be placed within and/or processed by a household appliance;
- Figure 2a: shows an example spectral scanning device used for scanning a clothing item;
- Figure 2b: shows an example spectral scanning device comprising a proximity and/or distance sensor;
- Figure 3: shows a spectral scanning device comprising a touch and pressure sensitive display;
- Figure 4a: shows an example scanning device comprising an optical pointer;
- Figure 4b: shows an example display of a scanning device; and
- Figure 4c: shows an example household appliance with a (partially) integrated scanning device.

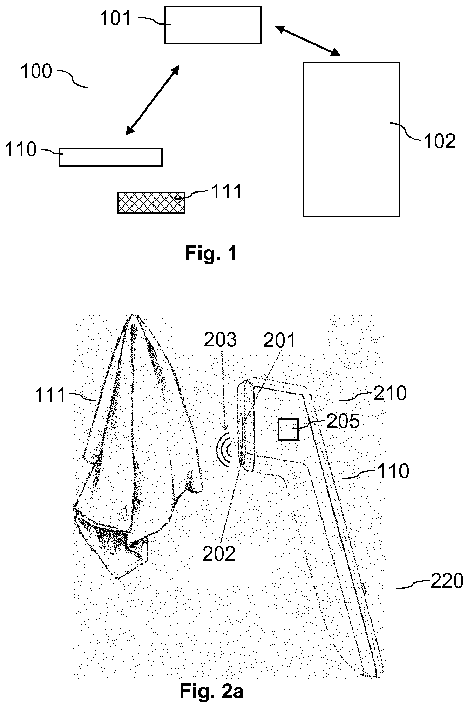

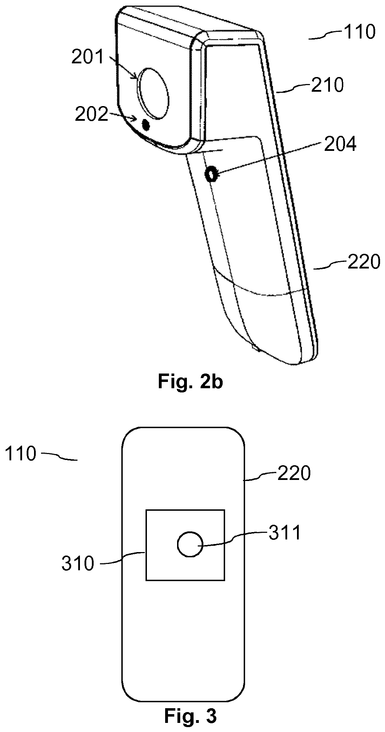

Figures 2a, 2b and 3 show an embodiment according to the invention. The examples of the other figures do not show the full and complete combination of features of the invention but are useful in understanding the invention.

As outlined above, the present document is directed at providing support to a user regarding the use of a household appliance in conjunction with a plurality of items that are to be processed by and/or placed within the household appliance. In this context, Fig. 1 shows a system 100 for determining property information regarding the properties of one or more items 111. The system 100 comprises a (possibly mobile and/or handheld) scanning device 110 which may be used by a user to scan an item 111, e.g. a clothing item or a food item. In particular, the scanning device 110 may be configured to determine spectral data regarding an item 111, notably an absorption spectrum and/or a reflection spectrum of an item 111.

The spectral data of an item 111 may be provided to an evaluation unit 101 (e.g. via a wired and/or wireless communication network). The evaluation unit 101 may be configured to determine property information based on the spectral data. In particular, the evaluation unit 101 may be configured to determine information regarding a composition of the item 111. By way of example, the evaluation unit 101 may be configured to determine the one or more textiles (e.g. cotton, wool, a synthetic textile, etc.) comprised within a clothing item. In another example, the evaluation unit 101 may be configured to determine the one or more ingredients comprised within a food item.

By way of example, the evaluation unit 101 may comprise or may have access to a database, wherein the database comprises a machine-learned classifier which is configured to determine property information based on the scanned spectral data of an item 111. The database may be a chemometrics database, which comprises and/or stores chemical information regarding different materials (e.g. at a molecular level). Alternatively or in addition, the evaluation unit 101, notably the classifier, may be configured to determine an operation mode for a household appliance 102 based on the spectral data. In an example, the evaluation unit 101 is comprised within the scanning device 110.

The evaluation unit 101 may be configured to provide the property information and/or information regarding the determined operation mode to a household appliance 102 (e.g. via a wired and/or wireless communication network). The property information may be used to select an operation mode of the household appliance 102. By way of example, the washing temperature of a washing machine may be selected based on the property information of the one or more clothing items 111 that are to be processed by the washing machine. In another example, the property information may be used to select an appropriate compartment of a refrigerator for storing a food item 111.

Hence, a scanning device 110 may provide support to a user with regards to the operation of a household appliance 102 in conjunction with one or more items 111. The process for scanning an item 111 may consist in placing the item 111 in proximity of the scanning device 110 (e.g. within 5cm, 1cm or less of the scanning device 110). Once the item 111 is correctly placed, a control button of the scanning device 110 may need to be pressed, in order to initiate the scanning process and the determination of the spectral data. The spectral data may then be evaluated (e.g. by an evaluation unit 101), in order to determine property information regarding the scanned item. The property information may be displayed on a display 310 of the scanning device 110 (as shown in Fig. 3 ).

Prior to performing a scanning process, it may be required to select an item type from a list of possible item types. Example item types are one or more clothing or textile types, one or more food types, etc. The scanning process may then be performed in dependence of the selected item type.

In many cases (e.g. when filling up a washing machine), a user needs to repeat the above mentioned scanning process several times. In such cases, the repeated selection of an item type and/or the repeated initiation of the scanning process may be time consuming and tiring.

Fig. 2a shows a scanning device 110 which comprises a spectral sensor 201, e.g. a Near Infrared (NIR) sensor, which is configured to determine the spectral data for an item 111. The spectral sensor 201 may be placed within a measuring head 210 of the scanning device 110. The spectral sensor 201 may be configured to emit a measurement signal (e.g. an electromagnetic signal spanning a given spectrum, such as the near infrared spectrum). Furthermore, the spectral sensor 201 may be configured to capture a reflected signal of the measurement signal, wherein the reflected signal has been reflected at the item 111. By comparing the spectrum of the measurement signal with the spectrum of the reflected signal, a reflection spectrum of the item 111 may be determined as spectral data, wherein the reflection spectrum is typically indicative of one or more properties of the item 111 (such as the composition of the item 111). The reflection spectrum may indicate the energy of the reflected signal relative to the measurement signal, as a function of wavelength or frequency.

The scanning device 110 further comprises a distance sensor 202 which is configured to determine distance information regarding the distance of a to-be-scanned item 111 from the spectral sensor 201. The distance sensor 202 may be positioned at the measuring head 210 of the scanning device 110. The distance sensor 202 may be or may comprise a capacitive sensor, an inductive sensor, a photoelectric sensor, an infrared sensor, an ultrasonic sensor, etc. The scanning device 110, notably a control unit 205 of the scanning device 110, is configured to automatically initiate a scanning process of the scanning and/or spectral sensor 201 in dependence of the distance information provided by the distance sensor 202. In particular, a scanning process is initiated automatically, if it is determined that the distance between the item 111 and the spectral sensor 201 is at or below a pre-determined distance threshold. By doing this, the need for manually initiating a scanning process may be omitted, thereby rendering the handling of a scanning device 110 more efficient, notably when scanning a relatively high number of items 111.

The automatic initiation of a scanning process is subjected to the scanning device 110 being in a repeat mode. By doing this, the erroneous initiation of scanning processes may be avoided.

Fig. 2b provides a perspective view of an example scanning device 110 comprising a measuring head 210 and a handle 220. The scanning device 110 may be held by a user at the handle 220. Furthermore, Fig. 2b shows a scan button 204 which may enable a user to start a scanning process.

As indicated above, scanning a sequence of different items 111, e.g. a pile of clothing items, may be cumbersome. In particular, it may be required to select an item type and to initiate an individual scanning process for each item 111. Fig. 3 shows a scanning device 110, notably the back of the handle 220 of a scanning device 110, comprising a touch and pressure sensitive display (also referred to as a 3D (three dimensional) touch screen) 310. The display 310 may be part of a user interface of the scanning device 110. The display 310 may be configured to provide a virtual repeat button 311, which enables a user to initiate an automatic scan of a sequence of different items 111 (i.e. to set a repeat mode of the scanning device 110). In particular, the virtual repeat button 311 may make use of the pressure and/or force sensitivity of the display 310. The virtual repeat button 311 may be actuated, if it is detected that a force which is applied to the display 310 at the position of the button 311 is equal to or higher than a pre-determined force threshold.

In a preferred example, a virtual button 311 is provided on the display 310, wherein the virtual button 311
- triggers a single scanning process, subject to detecting a touch event with a force being smaller than the pre-determined force threshold; and/or
- triggers a sequence of scanning processes for different items 111, subject to detecting a touch event with a force being equal to or greater than the pre-determined force threshold (thereby entering the repeat mode).

The repeat mode may be triggered by a user, in order to indicate to the scanning device 110 that several different items 111 are to be scanned. The control unit 205 is configured to automatically initiate a scanning process in dependence of the distance information, only if the repeat mode is activated. By doing this, erroneous initiations of scanning processes may be avoided.

The distance sensor 202 may comprise or may be a switch which is actuated (e.g. opened or closed) when a to-be-scanned item 111 touches the distance sensor 202. Hence, the distance information may indicate whether the scanning device 110 touches the item 111 (such that the distance is zero) or not (such that the distance is greater than zero). The distance threshold may be set of zero, such that a scanning process is only initiated automatically, if it is determined that the scanning device 110 touches the to-be-scanned item 111.

Hence, a scanner or scanning device 110 is described, which may be used to scan e.g. clothing items 111 for determining the composition, for performing stain detection and/or for sending washing instructions to a washing machine.

Alternatively or in addition, the scanning device 110 may be used to scan food items, medicine and/or drinks. The aspects described in the present document are directed at improving the scan time for scanning different items 111, e.g. clothing or food items. The scanning time may be shorted by adding a distance and/or proximity sensor 202 to the scanning device 110 and/or by providing a virtual repeat button 311. The proximity and/or distance sensor 202 provides distance information, which indicates that an item 111 is placed sufficiently close to the proximity sensor 202, e.g. at a distance of 1-2cm. Upon detecting that an item 111 is placed nearby the scanner 110, the scanner 110 automatically initiates the scan process and scans the item 111 (if the repeat mode is activated).

Hence, means for improving the scanning time of different items 111 using a scanning device 110 are described. For this purpose, a display area 310 with a 3D touch function may be provided. The 3D touch screen 310 may be configured to sense how much pressure a user applies to the screen area 310. This pressure sensitivity of the display 310 may be used to trigger and repeat the scanning process without the need for a user to browse through the menu screen of a user interface of the scanning device 110.

The scanning device 110 may enable a user to switch on or off the functionality of an automatic scanning process. In particular, the user interface of the scanning device 110 may comprise a menu option which enables or disables the pressure sensitivity of the display 310. By doing this, the reliability of use of the scanning device 110 may be improved.

A user may trigger a scanning process by pressing the screen 310, notably by pressing a virtual button 311 on the screen 310. Furthermore, a user may cause automatically repeated scanning processes by pressing the screen 310, notably the virtual button 311, with a slightly increased pressure. By doing this, the number of input steps for performing repeated scanning processes may be reduced.

The aspects described in the present document simplify and accelerate the scanning process for determining property information regarding a series of different items 111. Furthermore, the automatic initiation of a scanning process enables a hands-free operation of a scanning device 110 (without the need for the user to look at the display 310 of the scanning device 110). Overall, the comfort and the efficiency of a scanning device 110 are improved.

Typically, the size of a display 310 of a scanning device 110 is relatively small. The use of a pressure and/or force sensitive display 310 enables the integration of various different functions on the limited space. By way of example, a "brief scan" of an item 111 may be provided, which enables a user to determine spectral data with an increased speed (and possibly with a reduced resolution). A brief scan may be performed prior to a full scan. The brief scan may e.g. be initiated by pressing the display 310, notably the virtual button 311, with a relatively high force (e.g. above a second force threshold). By providing such a brief scan option, an efficient scheme for providing (basic) information regarding an item 111 (e.g. prior to compiling a basket of clothing items or prior to selecting food items) may be provided.

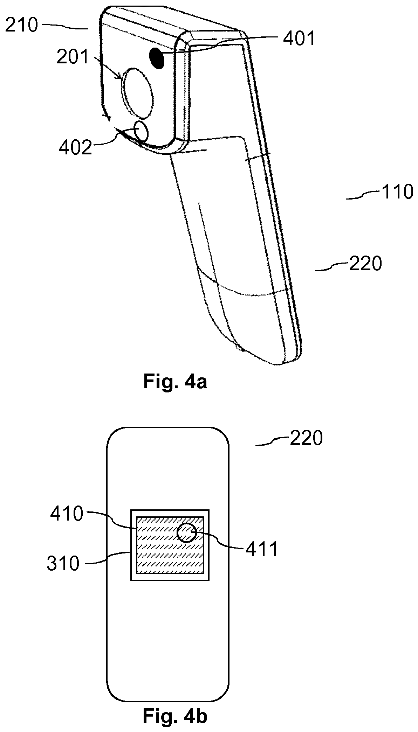

Fig. 4a shows a scanning device 110 which may comprise a camera 402 that is configured to capture picture data regarding one or more items 111 which are scanned by the scanning device 110. The picture data may be shown on the display 310, thereby indicating to a user the one or more items 111 which have been scanned by the device 110.

Furthermore, the scanning device 110 may comprise an optical pointing unit 401 which is configured to emit light onto an item 111, in order to highlight the item 111 to a user. The pointing unit 401 may comprise a laser pointer which is configured to generate a laser beam.

The scanning device 110 may be configured to determine spectral data for multiple items 111 (e.g. within a single scanning process). In other words, the scanning device 110 may be configured to be held in front of a plurality of different items 111 (e.g. a pile of clothing items). Furthermore, the scanning device 110 may be configured to determine spectral data for each of the plurality of different items 111. By way of example, a spatial map of spectral data may be provided for the differently positioned items 111. The spectral data for the different items 111 may be used to determine property information for the different items 111.

The control unit 205 may be configured to identify one or more items 111 within the plurality of different items 111, which exhibit a particular property. By way of example, the control unit 205 may be configured to identify one or more clothing items 111 which may be processed jointly within a washing machine 102. Furthermore, the control unit 205 may be configured to control the pointing unit 401 to optically highlight the one or more identified items 111. By way of example, a laser beam may be oriented sequentially to the one or more identified items 111. The user may then grab the one or more identified items 111 for further processing (e.g. for further processing within the washing machine 102). By highlighting items 111, the processing (notably the grouping) of a plurality of different items 111 may be rendered more efficient.

Alternatively or in addition to highlighting the one or more identified items 111 using a pointing unit 401, the control unit 205 may be configured to show a picture 410 of the plurality of scanned items 111 on the display 310 (e.g. using the picture data provided by the camera 402). The one or more identified items 111 may then be highlighted and/or marked within the picture 410, e.g. using different colours and/or using other kinds of markers 411 (see Fig. 4b ).

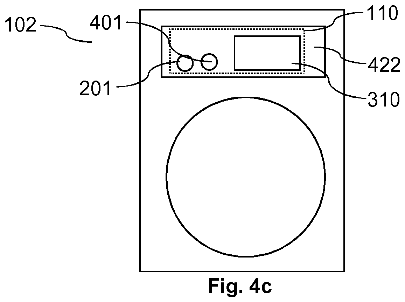

Fig. 4c shows a washing machine 102, as an example for a household appliance, which comprises a (at least partially) integrated scanning device 110. In particular, the washing machine 102 may comprise a spectral sensor 201 and a display 310 (e.g. at a user interface 422 of the washing machine 102). Furthermore, the washing machine 102 may comprise a pointing unit 401. By doing this, a user may place a plurality of items 111 in front of the washing machine 102, and the spectral sensor 201 may provide spectral data regarding the plurality of items 111. Furthermore, the pointing unit 401 may highlight one or more items 111 within the plurality of items 111. By way of example, one or more items 111 of a particular type may be identified. These items 111 may then be placed by the user within the washing machine 102 for processing. By integrating the scanning device 110 within a household appliance 102 the comfort for a user may be further increased.

## Claims

1. A scanning device (110) for determining spectral data regarding a plurality of different items (111), wherein the scanning device (110) comprises
- a spectral sensor (201) configured to determine spectral data regarding an item (111);
- a touch and pressure sensitive display (310) configured to provide a virtual button (311); and
- a control unit (205) configured to
- determine whether the virtual button (311) has been actuated to enable a repeated scanning process; and
- automatically initiate a sequence of scanning processes for determining spectral data for the plurality of different items (111), if it is determined that the virtual button (311) has been actuated to enable the repeated scanning process, wherein
- the scanning device (110) comprises a proximity and/or distance sensor (202) configured to determine distance information regarding a distance of a first item (111) from the plurality of different items (111) to the spectral sensor (201); and
- the control unit (205) is configured to
- determine, based on the distance information, that the distance of the first item (111) is at or below a pre-determined distance threshold; and
- when it is determined that the distance of the first item (111) is at or below a pre-determined distance threshold, automatically initiate a first scanning process, of the sequence of scanning processes, of the spectral sensor (201) for determining spectral data regarding the first item (111) only if it is determined that the scanning device (110) is in a repeat mode for the repeated scanning process, wherein the virtual button (311) being actuated sets the repeat mode of the scanning device (110).

2. The scanning device (110) of claim 1, wherein the control unit (205) is configured to automatically initiate the scanning process for the plurality of different items (111) in dependence of the respective distance information for each of the plurality of different items (111), if it is determined that the virtual button (311) has been actuated to enable the repeated scanning process.

3. The scanning device (110) of any previous claims, wherein the control unit (205) is configured to
- determine force information regarding a force which is applied to the virtual button (311); and
- determine, based on the force information, whether the virtual button (311) has been actuated to enable the repeated scanning process.

4. The scanning device (110) of claim 3, wherein the control unit (205) is configured to
- determine, based on the force information, if the applied force is at or above a force threshold; and
- determine that the virtual button (311) has been actuated to enable the repeated scanning process, if it is determined that the applied force is at or above the force threshold; and/or
- determine that the virtual button (311) has been actuated to enable a single scanning process, if it is determined that the applied force is below the force threshold.

5. The scanning device (110) of any of claims 3 to 4, wherein
- the control unit (205) is configured to initiate a brief scanning process or a complete scanning process of an item (111) in dependence of the force information; and
- the brief scanning process provides spectral data at a lower resolution than the complete scanning process.

6. The scanning device (110) of any previous claim, wherein
- the scanning device (110) is configured to be handheld; and/or
- the scanning device (110) comprises a measuring head (210) comprising the spectral sensor (201) and a handle (220) configured to be held by a users' hand; and/or
- the display (310) is positioned on a backside of the scanning device (110) and the spectral sensor (201) is positioned on a frontside of the scanning device (110).

7. The scanning device (110) of any previous claims, wherein
- the scanning device (110) comprises a user interface, notably shown on the display (310), which enables a user to select an item type from a list of different items types;
- the list of different item types notably comprises one or more types of clothing items (111) and/or one or more types of food items (111);
- the spectral sensor (201) is configured to determine the spectral data in dependence of the selected item type; and
- the spectral sensor (201) is notably configured to select a spectral range of a measurement signal for determining the spectral data based on the selected item type.

8. The scanning device (110) of claim 7, wherein the control unit (205) is configured to automatically reuse a selected item type for scanning the plurality of different items (111), if it is determined that the virtual button (311) has been actuated.

9. The scanning device (110) of any previous claims, wherein the control unit (205) is configured to
- determine property information regarding a property of an item (111) based on the spectral data for the item (111); and/or
- control a household appliance (102) for operation in conjunction with the item (111), based on the spectral data for the item (111).

10. The scanning device (110) of any previous claims, wherein the spectral sensor (201) comprises a near infrared sensor.

11. A household appliance (102) configured to store and/or to process a plurality of different items (111); wherein the household appliance (102) comprises a scanning device (110) according to any of the previous claims, configured to determine spectral data regarding the plurality of different items (111) and to provide the spectral data to an evaluation unit (101) being configured to determine information regarding a composition of the item (111), in order to support a user for storing and/or processing the plurality of different items (111) in the household appliance (102).

## Patentansprüche

1. Abtastvorrichtung (110) zum Bestimmen von Spektraldaten hinsichtlich mehrerer verschiedener Elemente (111), wobei die Abtastvorrichtung (110) Folgendes umfasst
- einen Spektralsensor (201), der konfiguriert ist, Spektraldaten hinsichtlich eines Elements (111) zu bestimmen;
- eine berührungs- und druckempfindliche Anzeige (310), die konfiguriert ist, eine virtuelle Taste (311) bereitzustellen; und
- eine Steuereinheit (206), die konfiguriert ist,
- zu bestimmen, ob die virtuelle Taste (311) betätigt worden ist, um einen wiederholten Abtastprozess zu ermöglichen; und
- eine Folge von Abtastprozessen zum Bestimmen von Spektraldaten für die mehreren verschiedenen Elemente (111) automatisch einzuleiten, falls bestimmt wird, dass die virtuelle Taste (311) betätigt worden ist, um den wiederholten Abtastprozess zu ermöglichen,
wobei
- die Abtastvorrichtung (110) einen Näherungs- und/oder Abstandssensor (202) umfasst, der konfiguriert ist, Abstandsinformationen hinsichtlich eines Abstands eines ersten Elements (111) der mehreren verschiedenen Elemente (111) zu dem Spektralsensor (201) zu bestimmen; und
- die Steuereinheit (205) konfiguriert ist,
- basierend auf den Abstandsinformationen zu bestimmen, dass sich der Abstand des ersten Elements (111) bei oder unter einem vorgegebenen Abstandsschwellenwert befindet; und
- wenn bestimmt wird, dass sich der Abstand des ersten Elements (111) bei oder unter einem vorgegebenen Abstandsschwellenwert befindet, einen ersten Abtastprozess der Folge von Abtastprozessen des Spektralsensors (201) zum Bestimmen von Spektraldaten hinsichtlich des ersten Elements (111) nur automatisch einzuleiten, falls bestimmt wird, dass sich die Abtastvorrichtung (110) in einer Wiederholungsbetriebsart für den wiederholten Abtastprozess befindet, wobei die betätigte virtuelle Taste (311) die Wiederholungsbetriebsart der Abtastvorrichtung (110) festlegt.

2. Abtastvorrichtung (110) nach Anspruch 1, wobei die Steuereinheit (205) konfiguriert ist, den Abtastprozess für die mehreren verschiedenen Elemente (111) in Abhängigkeit von den jeweiligen Abstandsinformationen für jedes der mehreren verschiedenen Elemente (111) automatisch einzuleiten, falls bestimmt wird, dass die virtuelle Taste (311) betätigt worden ist, um den wiederholten Abtastprozess zu ermöglichen.

3. Abtastvorrichtung (110) nach einem der vorgehenden Ansprüche, wobei die Steuereinheit (205) konfiguriert ist,
- Kraftinformationen hinsichtlich einer Kraft zu bestimmen, die auf die virtuelle Taste (311) ausgeübt wird; und
- basierend auf den Kraftinformationen zu bestimmen, ob die virtuelle Taste (311) betätigt worden ist, um den wiederholten Abtastprozess zu ermöglichen.

4. Abtastvorrichtung (110) nach Anspruch 3, wobei die Steuereinheit (205) konfiguriert ist,
- basierend auf den Kraftinformationen zu bestimmen, ob sich die ausgeübte Kraft bei oder über einem Kraftschwellenwert befindet; und
- zu bestimmen, dass die virtuelle Taste (311) betätigt worden ist, um den wiederholten Abtastprozess zu ermöglichen, falls bestimmt wird, dass sich die ausgeübte Kraft bei oder über dem Kraftschwellenwert befindet; und/oder
- zu bestimmen, dass die virtuelle Taste (311) betätigt worden ist, um einen einzigen Abtastprozess zu ermöglichen, falls bestimmt wird, dass sich die ausgeübte Kraft unter dem Kraftschwellenwert befindet.

5. Abtastvorrichtung (110) nach einem der Ansprüche 3 oder 4, wobei
- die Steuereinheit (205) konfiguriert ist, einen kurzen Abtastprozess oder einen vollständigen Abtastprozess eines Elements (111) in Abhängigkeit von den Kraftinformationen einzuleiten; und
- der kurze Abtastprozess Spektraldaten mit einer geringeren Auflösung als der vollständige Abtastprozess bereitstellt.

6. Abtastvorrichtung (110) nach einem vorhergehenden Anspruch, wobei
- die Abtastvorrichtung (110) konfiguriert ist, um getragen zu werden; und/oder
- die Abtastvorrichtung (110) einen Messkopf (210) umfasst, der den Spektralsensor (201) und einen Griff (220), der konfiguriert ist, durch die Hand eines Anwenders gehalten zu werden, umfasst; und/oder
- die Anzeige (310) auf einer Rückseite der Abtastvorrichtung (110) positioniert ist und der Spektralsensor (201) auf einer Vorderseite der Abtastvorrichtung (110) positioniert ist.

7. Abtastvorrichtung (110) nach einem der vorgehenden Ansprüche, wobei
die Abtastvorrichtung (110) eine Anwenderschnittstelle umfasst, die insbesondere auf der Anzeige (310) gezeigt wird, die es einem Anwender ermöglicht, einen Elementtyp aus einer Liste verschiedener Elementtypen auszuwählen;
- die Liste verschiedener Elementtypen insbesondere einen oder mehrere Typen von Kleidungselementen (111) und/oder einen oder mehrere Typen von Lebensmittelelementen (111) umfasst;
- der Spektralsensor (201) konfiguriert ist, die Spektraldaten in Abhängigkeit von dem ausgewählten Elementtyp zu bestimmen; und
- der Spektralsensor (201) insbesondere konfiguriert ist, einen Spektralbereich eines Messsignals zum Bestimmen der Spektraldaten basierend auf dem ausgewählten Elementtyp auszuwählen.

8. Abtastvorrichtung (110) nach Anspruch 7, wobei die Steuereinheit (205) konfiguriert ist, einen ausgewählten Elementtyp zum Abtasten der mehreren verschiedenen Elemente (111) automatisch wiederzuverwenden, falls bestimmt wird, dass die virtuelle Taste (311) betätigt worden ist.

9. Abtastvorrichtung (110) nach einem der vorgehenden Ansprüche, wobei die Steuereinheit (205) konfiguriert ist,
- Eigenschaftsinformationen hinsichtlich einer Eigenschaft eines Elements (111) basierend auf den Spektraldaten für das Element (111) zu bestimmen; und/oder
- ein Haushaltsgerät (102) für den Betrieb in Verbindung mit dem Element (111) basierend auf den Spektraldaten für das Element (111) zu steuern.

10. Abtastvorrichtung (110) nach einem der vorgehenden Ansprüche, wobei der Spektralsensor (201) einen Sensor für nahes Infrarot umfasst.

11. Haushaltsgerät (102), das konfiguriert ist, mehrere verschiedene Elemente (111) zu lagern und/oder zu verarbeiten,
wobei das Haushaltsgerät (102) eine Abtastvorrichtung (110) nach einem der vorhergehenden Ansprüche umfasst, die konfiguriert ist, Spektraldaten hinsichtlich der mehreren verschiedenen Elemente (111) zu bestimmen und die Spektraldaten einer Auswertungseinheit (101) bereitzustellen, die konfiguriert ist, Informationen hinsichtlich einer Zusammensetzung des Elements zu bestimmen, um einen Anwender beim Lagern und/oder Verarbeiten der mehreren verschiedenen Elemente (111) in dem Haushaltsgerät (102) zu unterstützen.

## Revendications

1. Dispositif de balayage (110) pour déterminer les données spectrales concernant une pluralité d'articles différents (111), où le dispositif de balayage (110) comprend :
- un capteur spectral (201) configuré pour déterminer les données spectrales concernant un article (111) ;
- un écran tactile et sensible à la pression (310) configuré pour fournir un bouton virtuel (311) ; et
- une unité de commande (205) configurée pour :
- déterminer si le bouton virtuel (311) a été actionné pour activer un processus de balayage répété ; et
- lancer automatiquement une séquence de processus de balayage pour déterminer les données spectrales pour la pluralité d'articles différents (111), s'il est déterminé que le bouton virtuel (311) a été actionné pour activer le processus de balayage répété, où :
- le dispositif de balayage (110) comprend un capteur de proximité et/ou de distance (202) configuré pour déterminer les informations de distance concernant la distance d'un premier article (111) de la pluralité d'articles différents (111) par rapport au capteur spectral (201) ; et
- l'unité de commande (205) est configurée pour :
- déterminer, sur la base des informations de distance, que la distance du premier article (111) est égale ou inférieure à un seuil de distance prédéterminé ; et
- lorsqu'il est déterminé que la distance du premier article (111) est égale ou inférieure à un seuil de distance prédéterminé, lancer automatiquement un premier processus de balayage, de la séquence de processus de balayage, du capteur spectral (201) pour déterminer les données spectrales concernant le premier article (111) uniquement s'il est déterminé que le dispositif de balayage (110) est dans un mode de répétition pour le processus de balayage répété, où le bouton virtuel (311) actionné active le mode de répétition du dispositif de balayage (110).

2. Dispositif de balayage (110) selon la revendication 1, dans lequel l'unité de commande (205) est configurée pour lancer automatiquement le processus de balayage pour la pluralité d'articles différents (111) en fonction des informations de distance respectives pour chacun de la pluralité d'articles différents (111), s'il est déterminé que le bouton virtuel (311) a été actionné pour activer le processus de balayage répété.

3. Dispositif de balayage (110) selon l'une quelconque des revendications précédentes, dans lequel l'unité de commande (205) est configurée pour :
- déterminer les informations de force concernant une force qui est appliquée au bouton virtuel (311) ; et
- déterminer, sur la base des informations relatives à la force, si le bouton virtuel (311) a été actionné pour activer le processus de balayage répété.

4. Dispositif de balayage (110) selon la revendication 3, dans lequel l'unité de commande (205) est configurée pour :
- déterminer, sur la base des informations relatives à la force, si la force appliquée est égale ou supérieure à un seuil de force ; et
- déterminer que le bouton virtuel (311) a été actionné pour activer le processus de balayage répété, s'il est déterminé que la force appliquée est égale ou supérieure au seuil de force ; et/ou
- déterminer que le bouton virtuel (311) a été actionné pour activer un processus de balayage unique, s'il est déterminé que la force appliquée est inférieure au seuil de force.

5. Dispositif de balayage (110) selon l'une quelconque des revendications 3 à 4, dans lequel :
- l'unité de commande (205) est configurée pour lancer un processus de balayage bref ou un processus de balayage complet d'un article (111) en fonction des informations relatives à la force ; et
- le processus de balayage bref fournit des données spectrales à une résolution inférieure à celle du processus de balayage complet.

6. Dispositif de balayage (110) selon l'une quelconque des revendications précédentes, dans lequel :
- le dispositif de balayage (110) est configuré pour être tenu à la main ; et/ou
- le dispositif de balayage (110) comprend une tête de mesure (210) comprenant le capteur spectral (201) et une poignée (220) configurée pour être tenue par la main d'un utilisateur ; et/ou
- l'écran d'affichage (310) est placé sur la face arrière du dispositif de balayage (110) et le capteur spectral (201) est placé sur la face avant du dispositif de balayage (110).

7. Dispositif de balayage (110) selon l'une quelconque des revendications précédentes, dans lequel :
- le dispositif de balayage (110) comprend une interface utilisateur, notamment affichée sur l'écran d'affichage (310), laquelle permet à un utilisateur de sélectionner un type d'article dans une liste de différents types d'articles ;
- la liste de différents types d'articles comprend notamment un ou plusieurs types d'articles vestimentaires (111) et/ou un ou plusieurs types d'articles alimentaires (111) ;
- le capteur spectral (201) est configuré pour déterminer les données spectrales en fonction du type d'article sélectionné ; et
- le capteur spectral (201) est notamment configuré pour sélectionner une plage spectrale d'un signal de mesure afin de déterminer les données spectrales en fonction du type d'article sélectionné.

8. Dispositif de balayage (110) selon la revendication 7, dans lequel l'unité de commande (205) est configurée pour réutiliser automatiquement un type d'article sélectionné pour balayer la pluralité d'articles différents (111), s'il est déterminé que le bouton virtuel (311) a été actionné.

9. Dispositif de balayage (110) selon l'une quelconque des revendications précédentes, dans lequel l'unité de commande (205) est configurée pour :
- déterminer les informations relatives à la propriété d'un article (111) sur la base des données spectrales de l'article (111) ; et/ou
- commander un appareil ménager (102) pour qu'il fonctionne en conjonction avec l'article (111), sur la base des données spectrales de l'article (111).

10. Dispositif de balayage (110) selon l'une quelconque des revendications précédentes, dans lequel le capteur spectral (201) comprend un capteur dans le proche infrarouge.

11. Appareil ménager (102) configuré pour stocker et/ou traiter une pluralité d'articles différents (111) ;
où l'appareil ménager (102) comprend un dispositif de balayage (110) selon l'une quelconque des revendications précédentes, configuré pour déterminer des données spectrales concernant la pluralité d'articles différents (111) et pour fournir les données spectrales à une unité d'évaluation (101) configurée pour déterminer des informations concernant la composition de l'article (111), afin d'aider un utilisateur à stocker et/ou à traiter la pluralité d'articles différents (111) dans l'appareil ménager (102).
